Europäisches Patentamt

European Patent Office

Office européen des brevets

(11) Veröffentlichungsnummer: **0 402 737**
**A2**

## (12) EUROPÄISCHE PATENTANMELDUNG

(21) Anmeldenummer: **90110586.6**

(22) Anmeldetag: **05.06.90**

(51) Int. Cl.5: **C02F 11/00, C02F 1/24, C02F 1/62**

(30) Priorität: **16.06.89 DE 3919788**

(43) Veröffentlichungstag der Anmeldung:
**19.12.90 Patentblatt 90/51**

(84) Benannte Vertragsstaaten:
**AT BE CH DE FR GB LI NL SE**

(71) Anmelder: **SIEBTECHNIK GMBH**
**Platanenallee 46**
**D-4330 Mülheim/Ruhr(DE)**

(72) Erfinder: **Weber, Michael**
**Friedrichstrasse 4**
**D-4330 Mühlheim/Ruhr(DE)**

(74) Vertreter: **Sroka, Peter-Christian, Dipl.-Ing. et al**
**Dominikanerstrasse 37 Postfach 111038**
**D-4000 Düsseldorf 11(DE)**

(54) **Verfahren zur Aufbereitung von schwermetallhaltigen Schlämmen sowie Einrichtung zur Durchführung des Verfahrens.**

(57) Ein Verfahren zur Aufbereitung von schwermetallhaltigen Schlämmen, bei welchem dem Schlamm zur Auslaugung der Schwermetallanteile eine starke Mineralsäure zugeführt wird (Z1) bis ein pH-Wert kleiner als 1 erreicht ist. Der verbleibende Feststoffanteil wird abgetrennt (5) und der schwermetallhaltigen sauren Lösung wird zur Ausfällung der Schwermetallanteile eine starke Base zugeführt (Z3) bis ein pH-Wert größer als 9 erreicht ist. Die basische Lösung wird mit einem Flockungsmittel und einem Schaumbildner geimpft (Z4-6) und der in ihr ausgefällte Feststoffanteil wird unter Zuführung von Luft durch Flotation (12) abgetrennt, indem die sich bildende Schaumschicht abgezogen, die in ihr enthaltene Restflüssigkeit durch Dekantieren (19) entfernt und der schwermetallhaltige Feststoffanteil abgeführt wird (A2).

Fig.1

## Verfahren zur Aufbereitung von schwermetallhaltigen Schlämmen sowie Einrichtung zur Durchführung des Verfahrens

Die Erfindung betrifft ein Verfahren zur Aufbereitung von schwermetallhaltigen Schlämmen mit den Merkmalen aus dem Oberbegriff des Patentanspruchs 1. Derartige Verfahren sind an sich bekannt und beispielsweise in der EP-PS 0 072 885 und DE-OS 33 01 120 beschrieben.

Die bekannten Verfahren sind in erster Linie dazu gedacht, stark schwermetallhaltige Schlämme wie Klärschlämme und Schlämme aus Flüssen und Hafen becken in der Weise aufzubereiten, daß der Feststoffanteil von den Schwermetallen befreit und somit sinnvoll für die Weiterverarbeitung, beispielsweise in der Landwirtschaft, eingesetzt werden kann. Die bekannten Verfahren haben den Nachteil, daß ihr Einsatz im großtechnischen Maßstab sehr aufwendig wird, insbesondere weil das Abtrennen der jeweiligen Feststoffanteile im Verfahren nicht befriedigend gelöst ist und beispielsweise aufwendige Filtriersysteme eingesetzt werden müssen.

Der Erfindung liegt die Aufgabe zugrunde ein Verfahren mit den Merkmalen aus dem Oberbegriff des Patentanspruchs 1 zu schaffen, bei dem die Abtrennung der Feststoffanteile, insbesondere der die Schwermetalle enthaltenden Feststoffanteile aus der basischen Lösung so verbessert ist, daß nicht nur eine quantitative Abtrennung der Schwermetalle möglich ist, sondern dies auch bei großen anfallenden Mengen in konstengünstiger Weise durchgeführt werden kann.

Die Lösung dieser Aufgabe geschieht erfindungsgemäß mit den Merkmalen aus dem kennzeichnenden Teil des Patentanspruchs 1. Vorteilhafte Weiterbildungen des erfindungsgemäßen Verfahrens sind in den Patentansprüchen 2 bis 10 beschrieben.

Ein besonders vorteilhafter Einsatz des erfindungsgemäßen Verfahrens liegt in seiner Anwendung auf die Aufbereitung von kontaminierten Feststoffen, insbesondere kontaminierten Böden, das in den Ansprüchen 11 bis 13 beschrieben ist.

Einrichtungen zur Durchführung des erfindungs gemäßen Verfahrens sind in den Ansprüchen 14 bis 18 beschrieben.

Der Grundgedanke der Erfindung besteht darin, zur Abtrennung des die Schwermetalle enthaltenden Feststoffanteils aus der basischen Lösung einen Flotationsprozeß zu verwenden.

Es ist zwar ein Verfahren zum Aufbereiten von Schlämmen mit Gehalten von Ölen und sonstigen lipophilen Leichtstoffen bekannt (DE-OS 35 40 256), bei dem die lipophilen Leichtstoffe in einem Flotationsvorgang mittels eingeblasener feinverteilter Luft abgetrennt werden. Es ist bisher nicht erkannt worden, daß der Flotationsprozeß auch zur Abtrennung der Schwermetallanteile eingesetzt werden kann, was außer dem verminderten aparativen Aufwand noch den Vorteil bringt, daß somit durch den Flotationsprozeß sowohl Schwermetalle als auch Kohlenwasserstoffe aus den Schlämmen entfernt werden können.

Ein weiterer Gedanke der Erfindung besteht darin, nicht nur den die Schwermetalle enthaltenden Feststoffanteil aus der basischen Lösung in Kombination mit der flotation durch Dekantieren zu entfernen, sondern bei einer besonders vorteilhaften Ausführungsform des erfindungsgemäßen Verfahrens auch die Abtrennung des schwermetallfreien Feststoffanteils aus der sauren Lösung durch Dekantieren vorzunehmen (Patentanspruch 2).

Der aus der sauren Lösung abgetrennte Feststoffanteil wird zweckmäßig durch Zugabe von basischen Stoffen, beispielsweise ungebranntem Kalk, neu tralisiert und rieselfähig gemacht (Patentanspruch 3). Um einen eventuellen geringen Restgehalt an Schwermetall in diesem Feststoffanteil noch weiter zu senken, kann hier noch eine Nachwäsche nachgeschaltet werden (Patentanspruch 4). Hierbei ist die Zugabe einer Säure im allgemeinen nicht mehr notwendig.

Bei der Flotation bilden die durch öllösende Mittel zum Aufschwimmen veranlaßten Schwermetallverbindungen und die ohnehin leicht aufschwimmenden Kohlenwasserstoffe auf der Oberfläche des Flotationsbades eine Schaumschicht. Hierbei besteht die Möglichkeit die Schwermetalle einzeln auszufällen, indem während der Flotation der pH-Wert stufenweise angehoben wird, so daß die Schwermetallverbindungen nacheinander ausfallen (Patentanspruch 5).

Der aus der Flotation gewonnenen basischen Lösung wird zweckmäßig eine Säure zugegeben bis ein neutraler pH-Wert eingestellt ist. Dabei können schwermetallhaltige Restfeststoffe, beispielsweise Kupferverbindungen, ausfallen, die durch einen zweiten Flotationsprozeß abgetrennt werden können (Patentanspruch 6 und 7).

Die aus den Flotationsprozessen stammenden schwermetallhaltigen Feststoffanteile können, da sie einen hohen Schwermetallgehalt haben, in einer Buntmetallhütte weiterverarbeitet werden.

Wenn der dem erfindungsgemäßen Verfahren zu unterwerfende Schlamm in der Form eines Dünnschlammes vorliegt, ist es zweckmäßig ihn einem Eindickungsprozeß zu unterwerfen (Patentanspruch 8). Dabei kann das beim Eindickungsprozeß abgeführte Wasser Schwermetalle und/oder Kohlenwasserstoffe enthalten. In diesem Falle wird dieses abgeführte Wasser gegebenenfalls über einen Ölabscheider der basischen Lösung zugeführt und so weiterverarbeitet (Patentanspruch 9 und 10).

Im folgenden werden anhand der beigefügten Zeichnungen ein Ausführungsbeispiel für eine Einrichtung zur Durchführung eines Verfahrens zur Aufbereitung von schwarmetallhaltigen und gegebenenfalls kohlenwasserstoffhaltigen Schlämmen sowie eine Einrichtung zur Durchführung eines Verfahrens zur Aufbereitung von kontaminierten Böden näher erläutert.

In den Zeichnungen zeigen:

Fig. 1 in einer schematischen Darstellung eine Anlage zur Aufbereitung von schwermetallhaltigen Schlämmen;

Fig. 2 nach der Art eines Flußdiagramms ein mechanisches Verfahren zur Aufbereitung von Feststoffen, die zur weiteren Aufbereitung einer Anlage nach Fig. 1 zugeführt werden sollen.

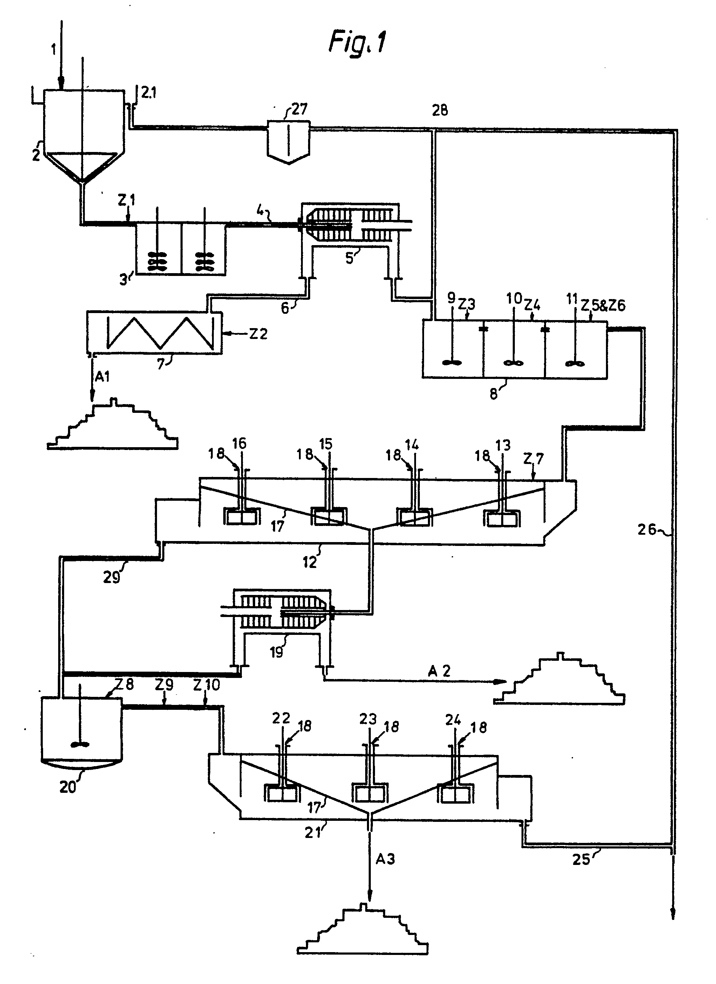

Die in Fig. 1 dargestellte Anlage ist zur Aufbereitung von schwermetallhaltigen Schlämmen gedacht, die als Dünnschlamm beispielsweise in einem nicht dargestellten Becken vorliegen. Der Dünnschlamm gelangt über eine Leitung 1 zunächst in einen Eindicker 2. Der am Ausgang des Eindickers 2 anfallende Dickschlamm wird einer Attritionszelle 3 oder einem ähnlichen Aggregat zugeführt, wobei ihm bei Z1 eine starke Mineralsäure, beispielsweise Salzsäure, in einer Menge zugeführt wird, daß ein pH-Wert kleiner als 1,0 eingestellt wird. In der Attritionszelle 3 werden unter diesen Bedingungen die Schwermetalle herausgelöst und an Feststoff anhaftende Kohlenwasserstoffe von Feststoff gelöst. Feststoff und Lösung gelangen dann über eine Leitung 4 in einen Dekanter 5, wo der von Schwermetallen befreite Feststoff von der die Schwermetalle enthaltende Lösung abdekantiert wird. Der noch feuchte Feststoff wird über eine Leitung 6 einem Mischer 7 zugeführt, indem er durch Zugabe von basischen Stoffen, zum Beispiel ungebranntem Kalk, bei Z2 neutralisiert und rieselfähig gemacht wird. Um den geringen Restgehalt an Schwermetall an diesem Feststoff noch weiter zu senken, ist an dieser Stelle eine nachgeschaltete Wäsche unter nochmaliger Verwendung der Aggregate 3, 5 und 7 möglich. Hierbei ist die Zugabe einer Säure allerdings nicht mehr notwendig.

Die im Denakter 5 anfallende Lösung wird einem Behälter 8 zugeführt, der drei Rührwerke 9, 10 und 11 aufweist. Dem Behälter 8 wird außerdem das im Überlauf 2.1 des Eindickers 2 aufgefangene Abwasser über einen Ülabscheider 27 zugeführt. Für den Fall, daß die sich im Überlauf 2.1 des Eindickers 2 sammelnde Flüssigkeit nicht verunreinigt ist, kann sie über den Ölabscheider 27 und ein Umschaltventil 28 einer Leitung 26 zugeführt werden und somit direkt beispielsweise in ein Kontrollbecken abgeführt werden.

Der dem Behälter 8 zugeführten stark sauren Lösung wird im Bereich des Rührwerks 9 bei Z3 eine starke Base beispielsweise Natronlauge zugegeben bis ein pH-Wert größer als 9,0 erreicht ist. Weiterhin wird im Bereich des Rührwerks 10 zur Schwermetallfällung Z4 ein Fällungshilfsmittel zugegeben. Es kann hier beispielsweise ein Fällungshilfsmittel verwendet werden, das unter der Handelsbezeichnung TMT 15 erhältlich ist. Schließlich wird die Lösung im Bereich des Rührwerks 11 bei Z5 mit einem Flockungsmittel, beispielsweise $FeCl_3$ und bei Z6, mit einem Flockungshilfsmittel geimpft bevor sie schließlich in eine Flotationsmaschine 12 gelangt.

Die Flotationsmaschine 12 dient zum Abtrennen der in der nunmehr stark basischen Lösung ausgefällten Schwermetallverbindungen.

Die Flotationsmaschine 12 besitzt mehrere Rührwerke 13 bis 16, wobei alle Rührwerke 13, 14, 15 und 16 für den Eintrag von Luft in die Lösung eingerichtet sind und dementsprechend einen Luftansaugstutzen 18 aufweisen. Im Bereich des Rührwerks 13 wird bei Z7 ein öllösendes Mittel, beispielsweise ein Schäumer, zugegeben.

Die durch das öllösende Mittel zum Aufschwimmen veranlaßten Schwermetallverbindungen und die ohnehin leicht aufschwimmenden Kohlenwasserstoffe bilden auf der Oberfläche des Flotationsbades eine Schaumschicht. Diese Reaktion wird durch die eingebrachte Luft unterstützt. Die Schaumschicht mit den eingebundenen Schwermetallverbindungen und den Kohlenwasserstoffen wird durch seitlich am Flotationstrog angeordnete, an sich bekannte und nicht eigens dargestellte Paddelwerke abgeskimmt und über Schaumauffangrinnen 17 zu einem Dekanter 19 befördert.

Das im Denakter 19 anfallende Filtrat und der aus der Flotationsmaschine 12 direkt über eine Leitung 29 abgeführte Auslauf werden einem Konditionierer 20 zugeführt. Hier wird der basischen Lösung bei Z8 eine Säure zugegeben bis sich ein neutraler pH-Wert eingestellt hat. Die dabei ausfallenden schwermetallhaltigen Restfeststoffe werden zusammen mit der Lösung einer weiteren Flotationsmaschine 21 zugeführt, nachdem ihnen zuvor bei Z9 ein Flockungshilfsmittel und bei Z10 wiederum ein öllösendes Mittel zugegeben wurde.

In der Flotationsmaschine 21 wird wiederum über Rührwerke 22, 23 und 24 Luft in das Flotationsbad eingeführt und die so entstandene Schaumschicht mit den Restfeststoffen mittels Paddelwerken abgeskimmt. Die an dem Dekanter 19 bei A2 und an der weiteren Flotationsmaschine 21 bei A3 abgeführten Feststoffe besitzen einen hohen Schwermetallgehalt und können in einer Buntmetallhütte weiterverarbeitet werden.

Das über die Leitung 25 aus der weiteren Flotationsmaschine 21 abgeführte Wasser kann abgeführt und beispielsweise dem nicht dargestellten Kontrollbecken zugeführt werden.

Es wird noch darauf hingewiesen, daß die Möglichkeit besteht, in der Flotationsmaschine 12 die Schwermetalle einzeln auszufällen. Hierzu wird in der Flotationsmaschine 12 der pH-Wert stufenweise angehoben, so daß unterschiedliche Schwermetallverbindungen nacheinander ausgefällt werden.

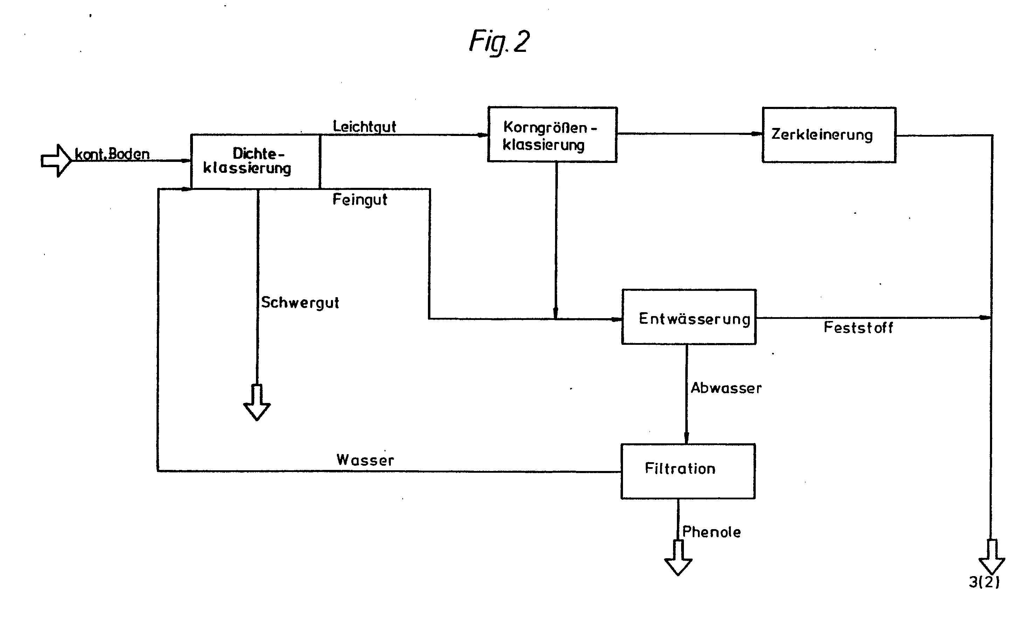

In Fig. 2 ist dargestellt wie mittels der oben beschriebenen Anlage kontaminierte Feststoffe, vor allen Dingen kontaminierte Böden, aufbereitet werden können, wobei in Fig. 2 ein mechanisches Aufbereitungsverfahren dargestellt ist, dem diese Böden zunächst unterworfen werden, damit sie anschließend der in Fig. 1 dargestellten Anlage zugeführt werden können. Je nachdem ob die gemäß dem Verfahren nach Fig. 2 behandelten Feststoffe dabei als Dickschlamm oder Dünnschlamm anfallen, können sie entweder dem Eindicker 2 oder direkt der Attritionszelle 3 zugeführt werden.

Bei der Vorbehandlung nach Fig. 2 werden die kontaminierten Böden, die mit Schwermetallen, Kohlenwasserstoffen oder manchmal auch Phenolen belastet sein können, zunächst einer mechanischen Aufbereitung unterworfen, damit anschließend die oben genannten Verunreinigungen von den Feststoffen gelöst und anschließend aus dem Abwasser ausgefällt werden können, wie anhand von Fig. 1 beschrieben.

Der anfallende Boden bzw. Feststoff wird zuerst einer an sich bekannten Anlage, beispielsweise einer Setzmaschine zur Dichteklassierung zugeführt.

Das Schwergut, das aufgrund seiner geringen Porosität nur sehr gering belastbar ist, kann hier sofort ausgebracht werden. Das anfallende Fein- und Leichtgut und die darin enthaltenen Verunreinigungen werden den weiteren Aufbereitungsstufen zugeführt.

Das Leichtgut wird auf eine Einrichtung, beispielsweise eine Siebmaschine, zur Korngrößenklassierung aufgegeben, wo das darin enthaltene Feingut von dem Grobgut getrennt wird. Gleichzeitig wird das Grobgut in dieser Anlage entwässert.

Anschließend wird das Grobgut in einer Zerkleinerungsanlage, beispielsweise einer Hammerprallmühle, zerkleinert. Hier wird für die nachfolgende Aufbereitung eine günstige, möglichst große Oberfläche geschaffen.

Das bei der Dichte- und Korngrößenklassierung anfallende Feingut wird mit dem Abwasser einer Entwässerungsanlage, beispielsweise einem Hydrozyklon, zugeführt. Der hier anfallende Feststoff wird zur weiteren Aufbereitung dem zerkleinerten Großgut beigegeben. Das bei der Entwässerung anfallende Abwasser wird zur Unterstützung des Verfahrens der Dichteklassierung rückgeführt. Hierbei werden im Falle einer zusätzlichen Verunreinigung des Bodens mit Phenolen diese zuvor über einen Filter, beispielsweise mit Aktivkohle, abfiltriert und das Wasser erst dann zurückgeführt.

Die bei diesem mechanischen Aufbereitungsverfahren schließlich anfallenden Feststoffe werden in der anhand von Fig. 1 beschriebenen Weise weiter aufbereitet.

## Ansprüche

1. Verfahren zur Aufbereitung von schwermetallhaltigen Schlämmen, bei welchem dem Schlamm eine starke Mineralsäure zugeführt wird bis ein pH-Wert kleiner als 1 erreicht ist, worauf der verbleibende Feststoffanteil abgetrennt und der schwermetallhaltigen sauren Lösung eine starke Base zugeführt wird bis ein pH-Wert größer als 9 erreicht ist, wonach die ausgefällten Feststoffanteile abgetrennt werden, dadurch gekennzeichnet, daß die basische Lösung mit einem Flockungsmittel und einem Schaumbildner geimpft und der in ihr ausgefällte Feststoffanteil unter Zuführung von Luft durch Flotation abgetrennt wird, indem die sich bildende Schaumschicht abgezogen, die in ihr enthaltene Restflüssigkeit durch Dekantieren entfernt und der Feststoffanteil abgeführt wird.

2. Verfahren nach Anspruch 1, dadurch gekennzeichnet, daß die Abtrennung des Feststoffanteils aus der sauren Lösung durch Dekantieren erfolgt.

3. Verfahren nach Anspruch 1 oder 2, dadurch gekennzeichnet, daß der aus der sauren Lösung abgetrennte Feststoffanteil durch Zugabe von basischen Stoffen neutralisiert und rieselfähig gemacht wird.

4. Verfahren nach einem der Ansprüche 1 bis 3, dadurch gekennzeichnet, daß der aus der sauren Lösung abgetrennte Feststoffanteil einer Nachwäsche unterworfen wird, wobei die wieder abgetrennte Waschflüssigkeit der basischen Lösung zugeführt wird.

5. Verfahren nach einem der Ansprüche 1 bis 4, dadurch gekennzeichnet, daß während der Flotation der pH-Wert stufenweise angehoben wird.

6. Verfahren nach einem der Ansprüche 1 bis 5, dadurch gekennzeichnet, daß die aus der Flotation gewonnene basische Lösung durch Zugabe einer Säure neutralisiert wird.

7. Verfahren nach Anspruch 6, dadurch gekennzeichnet, daß bei der Neutralisation der basischen Lösung ausfallende Restfeststoffe nach Zugabe eines Flockungsmittels und eines Schaumbildners unter Zuführung von Luft durch eine zweite Flotation abgetrennt werden.

8. Verfahren nach einem der Ansprüche 1 bis 7, dadurch gekennzeichnet, daß der Schlamm vor der Zuführung der Mineralsäure einem Eindickungsprozeß unterworfen wird.

9. Verfahren nach Anspruch 8, dadurch gekennzeichnet, daß die beim Eindickungsprozeß abgeführte Flüssigkeit der basischen Lösung zugeführt wird.

10. Verfahren nach Anspruch 8 oder 9, dadurch gekennzeichnet, daß aus der beim Eindickungsprozeß abgeführten Flüssigkeit Ölanteile abgetrennt werden.

11. Verfahren zur Aufbereitung von kontaminierten Böden, dadurch gekennzeichnet, daß der Boden einer Dichteklassierung unterworfen wird, bei der gering belastetes Schwergut abgeführt und der aus dem Leichtgut gegebenenfalls nach Zerkleinern von Grobgut erhaltene Schlamm nach dem Verfahren eines der Ansprüche 1 bis 10 weiterverarbeitet wird.

12. Verfahren nach Anspruch 11, dadurch gekennzeichnet, daß bei mit Phenolen belasteten Böden das bei der Dichteklassierung zugeführte Wasser wieder abgezogen und nach Abfiltern der Phenole in den Dichteklassierungsprozeß zurückgeführt wird.

13. Einrichtung zur Durchführung des Verfahrens nach den Ansprüchen 1 bis 3, gekennzeichnet durch eine Attritionszelle (3) der ein erster Dekanter (5) nachgeordnet ist aus dem der Feststoffanteil einem Mischer (7) zugeführt wird, während die saure Lösung einem Rührwerk (8) zugeführt wird und dem Rührwerk (8) eine Flotationsmaschine (12) mit mehreren Rührwerken (13 bis 16), Luftansaugstutzen (18) und Paddelwerken zum Abziehen des Schaumes nachgeordnet ist, der einem zweiten Dekanter (19) zugeführt wird.

14. Einrichtung nach Anspruch 13 zur Durchführung des Verfahrens nach Anspruch 7, gekennzeichnet durch einen der Flotationsmaschine (12) nachgeordneten Konditionierer (20), an den sich eine zweite Flotationsmaschine (21) mit mehreren Rührwerken (22 bis 24), Luftansaugstutzen (18) und Paddelwerken anschließt.

15. Einrichtung nach Anspruch 13 oder 14 zur Durchführung des Verfahrens nach Anspruch 9 oder 10, gekennzeichnet, durch einen der Attritionszelle (3) vorgeordneten Eindicker (2), dessen Überlauf (2a) über einen Ölabscheider (27) mit dem Einlaß des Rührwerks (8) verbindbar ist.

16. Einrichtung zur Durchführung des Verfahrens nach Anspruch 11, gekennzeichnet durch eine Anlage zur Dichteklassierung der eine Anlage zur Korngrößenklassierung nachgeordnet ist, von der aus das Feingut direkt und das Grobgut über eine Zerkleinerungsanlage einer Anlage zur Durchführung des Verfahrens nach einem der Ansprüche 1 bis 10 zugeführt wird.

17. Einrichtung nach Anspruch 16 zur Durchführung des Verfahrens nach Anspruch 12, dadurch gekennzeichnet, daß der Anlage zur Korngrößenklassierung eine Entwässerungsanlage sowie ein Filter zur Abfilterung von Phenolen nachgeordnet ist.

# Fig.1

# Fig. 2

kont. Boden → **Dichte-klassierung**

Leichtgut → **Korngrößen-klassierung** → **Zerkleinerung**

Feingut

Schwergut

**Entwässerung** → Feststoff

Abwasser

Wasser → **Filtration**

Phenole

3(2)

EP 0 402 737 A2